# FASCICULE DE BREVET EUROPEEN

(11) **EP 3 126 154 B1**
(45) Date de publication et mention de la délivrance du brevet: **11.04.2018**
(21) Numéro de dépôt: 15711256.6
(22) Date de dépôt: 27.02.2015
(51) Int. Cl.: B60B 39/12

(54) **TAPIS DE DÉSENLISEMENT**
ANTI-SINK MATTE
ANTI-SINK MAT

(30) Priorité: 01.04.2014 FR 1452872; 02.12.2014 FR 1461763
(43) Date de publication de la demande: 08.02.2017
(73) Titulaire: Musthane, 59780 Willems (FR)
(72) Inventeur: ROSIER, Reza, B-7711 Dottignies (BE)
(74) Mandataire: Balesta, Pierre
(86) Numéro de dépôt international: PCT/FR2015/050477
(87) Numéro de publication internationale: WO 2015/150650

(56) Documents cités:
- US-A- 3 701 474

## Description

### Arrière-plan de l'invention

La présente invention concerne le domaine des dispositifs de désenlisement de véhicules à roues, du type voitures ou camions.

Il est connu qu'un véhicule à roues peut se retrouver enliser dans le sol. Lorsque le véhicule est enlisé, au moins l'une de ses roues motrices patine et creuse le sol en formant une ornière dans laquelle elle s'enfonce. L'ornière présente la forme d'un renfoncement formé dans le sol. La roue est alors bloquée au fond de l'ornière si bien que le véhicule ne peut plus avancer.

Une situation d'enlisement peut se produire dans le sable ou dans la boue. On parle alors d'ensablement ou d'embourbement.

Le dispositif de désenlisement selon l'invention permet alors de désensabler ou désembourber, selon la situation, le véhicule prisonnier du sol.

Pour désenliser un véhicule, il est connu d'utiliser des plaques rigides, en plastique ou en métal, que l'on place dans l'ornière sous la roue motrice enlisée. La roue trouve alors un appui lui permettant de rouler sans patiner et d'avancer sur la plaque, grâce à quoi le véhicule peut se dégager de l'ornière.

Un inconvénient d'une telle plaque est son encombrement. Pour résoudre ce problème, on connaît des plaques rigides constituées de plusieurs portions de plaque que l'on vient fixer les unes aux autres afin de former la plaque. Si un tel dispositif de désenlisement présente un encombrement plus réduit, il présente en revanche l'inconvénient de nécessiter un temps de montage et démontage assez long. En outre, la plaque présente une certaine fragilité. Enfin, si les portions de plaque ne sont pas correctement nettoyées après usage, il peut être difficile de monter à nouveau la plaque, par exemple, à cause de la boue qui vient se loger entre les portions de plaque.

On connait également des tapis de désenlisement tels que celui proposé dans US 3 701 474. Ce type de tapis, formé de plaques rigides liées par des anneaux faisant charnière ne présente toutefois pas une souplesse suffisante pour permettre de glisser efficacement le tapis dans l'ornière, sous la roue enlisée. De plus, en pratique, on constate que les éléments d'accroché transversaux seuls ne suffisent pas à empêcher la roue de patiner et donc à guider le pneu hors de l'ornière. En outre, ce tapis est particulièrement malcommode à transporter.

### Objet et résumé de l'invention

Un but de la présente invention est de proposer un dispositif de désenlisement remédiant aux inconvénients précités.

Pour ce faire, l'invention porte sur un tapis de désenlisement enroulable sur lui-même pour véhicule ayant au moins une roue, ledit tapis de désenlisement ayant une face inférieure et une face supérieure de roulage, et comportant une portion principale de roulage et une languette d'amorce de roulage qui est fixée à une première extrémité de la portion principale de roulage par une portion de connexion formant charnière agencée pour abaisser la languette d'amorce de roulage par rapport à la portion principale de roulage, grâce à quoi la languette d'amorce de roulage peut être positionnée au fond d'une ornière dans laquelle ladite roue du véhicule est enlisée, la languette d'amorce de roulage comportant une pluralité d'éléments de rigidification s'étendant transversalement et une face supérieure munie de crampons, la portion principale de roulage et la languette d'amorce de roulage étant constituées d'au moins une couche textile recouvert d'une couche de polymère.

Un premier avantage du tapis de désenlisement selon l'invention est son faible encombrement lorsqu'il est en position enroulée, grâce à quoi il peut alors être facilement transporté. En outre, il ne nécessite pas de montage, ou bien alors un montage très simple dans la variante de réalisation dans laquelle la languette d'amorce de roulage est démontable de la portion de roulage principale. Le tapis est également beaucoup plus léger et plus facile à manipuler qu'un lot de plaques métalliques de désenlisement.

Lorsque la languette d'amorce de roulage est abaissée par rapport à la portion principale de roulage, la languette d'amorce de roulage s'étend dans un plan qui s'étend sous le plan de la portion principale de roulage. La languette d'amorce de roulage peut être amenée au fond de l'ornière tandis que la portion principale de roulage reste sensiblement parallèle au sol, au-dessus de l'ornière.

On comprend donc que la languette d'amorce de roulage, et éventuellement la portion de connexion formant charnière, forment une pente, inclinée par rapport à la portion principale de roulage, permettant à la roue enlisée de se dégager de l'ornière. Grâce à l'invention, la roue enlisée, par exemple une des roues motrices, vient accrocher la languette d'amorce de roulage, roule sur la languette d'amorce de roulage et s'extrait de l'ornière en montant sur la portion principale de roulage. Le véhicule roule alors sur la portion principale de roulage, de préférence jusqu'à ce que les autres roues soient également sorties des ornières en roulant elles aussi sur la languette d'amorce de roulage et la portion principale de roulage.

De manière avantageuse, la languette d'amorce de roulage est souple grâce à quoi elle peut être facilement insérée sous la roue enlisée.

Selon un mode de réalisation, la portion de connexion formant charnière est une charnière reliant directement la languette d'amorce de roulage à la portion principale de roulage.

Selon une variante préférentielle, la portion de connexion formant charnière est une portion souple reliant la languette d'amorce de roulage à la portion principale de roulage. La portion souple est alors agencée pour pivoter par rapport à la languette d'amorce de roulage, et par rapport à la portion principale de roulage, grâce à quoi la languette d'amorce de roulage peut être abaissée par rapport à la portion principale de roulage de sorte que la languette s'étend dans un plan situé sous celui de la portion principale de roulage.

Selon l'invention, les crampons disposés sur la face supérieure de la languette d'amorce de roulage ont pour effet de faciliter l'accroche du pneu de la roue enlisée. Ces crampons viennent s'engager dans le pneu afin d'éviter que la roue patine sur la languette d'amorce de roulage.

Les crampons sont préférentiellement, mais pas exclusivement, constitués de pièces rapportées métalliques faisant saillie depuis la face supérieure de la languette d'amorce de roulage. On peut toutefois prévoir d'autres formes de crampons.

Avantageusement, au moins la languette d'amorce de roulage comporte une pluralité d'éléments de rigidification s'étendant transversalement.

Un intérêt de la présence des éléments de rigidification est de rigidifier la languette d'amorce afin d'éviter qu'elle ne plisse sous la roue. On comprend donc que cela permet d'améliorer encore l'efficacité du tapis de désenlisement.

La synergie entre la présence des crampons et des éléments de rigidification permet donc de faciliter sensiblement le désenlisement du véhicule.

Selon une variante préférentielle, la portion principale de roulage est également munie d'éléments de rigidification transversaux, qui sont préférentiellement intégrés dans la portion supérieure de roulage.

Conformément à l'invention, la portion principale de roulage et la languette d'amorce de roulage sont constituées d'au moins un textile recouvert d'une couche de polymère, de préférence un élastomère. Un tel matériau présente l'avantage d'être souple, imperméable, résistant et léger en plus de permettre un nettoyage rapide du tapis.

La couche de polymère est préférentiellement munie d'empreintes afin d'améliorer encore l'accroche du pneu. Selon une autre variante, les crampons sont des protubérances de la couche polymère.De préférence, la portion principale de roulage et la languette d'amorce sont constituées de deux couches textiles superposées, et les éléments de rigidification sont disposés entre les deux couches textiles.

Selon un aspect particulièrement avantageux de l'invention, la languette d'amorce de roulage présente une largeur sensiblement inférieure à la largeur de la portion principale de roulage.

Un intérêt est que la languette d'amorce de roulage descend dans l'ornière alors que la portion principale de roulage, plus large, prend appui sur le sol, hors de l'ornière, en restant sensiblement parallèle au sol, et ce sans glisser à l'intérieur de l'ornière grâce à sa largeur sensiblement supérieure à celle de l'ornière.

Un tel agencement contribue à faciliter le désenlisement du véhicule.

Un autre intérêt de disposer d'une languette ayant une petite largeur comparativement à la largeur de la portion principale de roulage est que la languette d'amorce peut être plus aisément placée par l'utilisateur sous la roue enlisée, ce qui facilite ensuite l'accroche du pneu et le désenlisement de la roue.

De préférence, la languette d'amorce de roulage présente une largeur comprise entre 15 cm et 40 cm. Une telle gamme de largeurs correspond sensiblement à la gamme moyenne de largeurs de roues de véhicules.

Selon un mode de réalisation préférentiel, la portion de connexion formant charnière est souple. Un intérêt est que la portion de connexion forme alors une pente courbe reliant la languette d'amorce de roulage à la portion principale de roulage, ce qui a pour effet d'améliorer l'accroche du pneu qui est partiellement enveloppée par la languette d'amorce et la portion de connexion.

Avantageusement, la portion de connexion formant charnière présente un premier bord d'extrémité relié à la première extrémité de la portion principale de roulage et un second bord d'extrémité relié à la languette d'amorce de roulage, la largeur du premier bord d'extrémité étant supérieur à la largeur du second bord d'extrémité. Cette diminution de largeur, entre la portion principale de roulage et la languette d'amorce de roulage, améliore la robustesse de la portion de connexion formant charnière.

Selon un mode de réalisation avantageux, la portion principale de roulage présente une longueur sensiblement supérieure à la longueur de la languette d'amorce de roulage. Cela permet au véhicule de prendre de l'élan après que la roue enlisée est sortie de l'ornière, de manière que les autres roues puissent également franchir l'ornière. On limite ainsi le risque que le véhicule ne s'enlise à nouveau à proximité de l'ornière. La languette d'amorce présente quant à elle une longueur nécessaire et suffisante pour que la roue puisse franchir l'ornière et monter sur la portion principale de roulage.

De préférence, la languette d'amorce de roulage présente une longueur comprise entre 30 cm et 70 cm. Encore de préférence, mais non exclusivement, la portion principale de roulage présente une longueur comprise entre 1 mètre et 10 mètres.

Pour améliorer encore l'adhérence de la roue sur le tapis de désenlisement, la portion principale de roulage et/ou la portion de connexion formant charnière, comporte également une face supérieure qui est préférentiellement munie de crampons disposés dans la continuité des crampons de la languette d'amorce de roulage.

Selon une variante, la languette d'amorce de roulage est détachable de la portion principale de roulage, ce qui permet un remplacement aisé en cas d'endommagement de la languette.

Selon un aspect avantageux de l'invention, la portion principale de roulage présente une deuxième extrémité, opposée à la première extrémité et à la languette d'amorce, qui comporte des moyens de fixation au sol du tapis. Les moyens de fixation améliorent la tenue au sol du tapis notamment lorsque la roue engage la languette d'amorce de roulage. Ceci évite notamment que le tapis ne glisse sous la roue et à l'intérieur de l'ornière, empêchant l'extraction de la roue embourbée.

De préférence, les moyens de fixation au sol du tapis comportent au moins un orifice avec lequel coopèrent des organes de fixation. Les organes de fixation sont préférentiellement, mais pas exclusivement, des attaches, des piquets ou des ancres de fixation, telles que celles décrites dans WO 2014/170574. Les organes de fixation coopèrent avec les orifices de fixation afin d'améliorer la tenue au sol du tapis. On comprend que l'utilisation d'organes de fixations couplés aux orifices de fixation assure un maintien efficace du tapis tout en présentant un moyen de fixation simple à installer et à utiliser.

Selon un aspect avantageux de l'invention, le tapis de désenlisement comporte en outre au moins un dispositif d'accroche pour améliorer l'accroche du pneu de la roue enlisée, ledit dispositif d'accroche s'étendant selon la direction transversale en faisant saillie depuis la face supérieure de roulage tout en étant fixé au tapis de désenlisement par au moins un élément de fixation afin de former un patin antidérapant. De préférence, le dispositif d'accroche est disposé au moins sur la portion principale de roulage.

On comprend que la direction transversale correspond à la largeur du tapis. Comme le dispositif d'accroche en saillie s'étend selon la direction transversale, il ne gêne pas le pliage ou l'enroulage sur lui-même du tapis.

Selon l'invention, le dispositif d'accroché est rigide. Il est avantageusement réalisé dans un matériau métallique, composite ou plastique. Pour améliorer l'accroche, la partie saillante du dispositif d'accroche n'est pas recouverte du matériau constitutif du tapis de désenlisement, notamment de polymère.

De façon préférentielle, le tapis comporte une pluralité de dispositifs d'accroche qui sont répartis selon tout ou partie de la longueur du tapis.

Avantageusement, le dispositif d'accroche est une pièce rapportée, qui est fixée au tapis par le biais de l'élément de fixation.

Selon une alternative, le dispositif d'accroche est un insert, distinct des éléments de rigidification, rendu solidaire du tapis lors de sa fabrication, par exemple lors d'une opération de vulcanisation.

De préférence, le dispositif d'accroche s'étend continûment sur plus de la moitié de la largeur du tapis, de préférence selon toute la largeur du tapis. Selon une variante, le dispositif d'accroché s'étend de manière discontinue selon la largeur du tapis. Dans ce cas, le dispositif d'accroche est préférentiellement constitué de portions de dispositifs d'accroche distantes les unes des autres, chaque portion étant fixée au tapis de désenlisement par au moins un élément de fixation.

Avantageusement, le dispositif d'accroche comporte :
un support disposé sur la face supérieure de roulage et s'étendant selon la direction transversale tout en étant fixé audit tapis par l'élément de fixation ;
une première plaque d'accroche faisant saillie depuis le support et s'étendant selon la direction transversale du tapis, de façon à s'étendre dans une surface transversale à la face supérieure de roulage.

De préférence, le support et/ou la première plaque d'accroché s'étendent selon sensiblement toute la largeur du tapis, de manière continue ou discontinue. Encore de préférence, le support présente la forme d'une lame qui s'étend transversalement et parallèlement à la face supérieure de roulage.

La première plaque d'accroche s'étend préférentiellement dans une surface qui est sensiblement orthogonale au support. Considéré selon la section transversale du dispositif d'accroché, l'ensemble constitué par le support et la première lame présente une forme en « T » renversé ou en « L » ou en « U » ou en « V ».

Encore de préférence, la première plaque d'accroche se présente sous la forme d'une lame qui s'étend dans un plan orthogonal à la surface supérieure de roulage.

De préférence, mais non exclusivement, l'élément de fixation est une vis de fixation qui solidarise le support au tapis. Selon une variante avantageuse, l'élément de fixation traverse l'épaisseur du tapis afin d'améliorer le maintien du dispositif d'accroche au tapis.

Encore de préférence, le support est fixé au tapis par une pluralité d'éléments de fixation.

Selon un mode de réalisation avantageux, le support et la première plaque d'accroche forment une seule et même pièce constituant un premier profilé rigide s'étendant selon la direction transversale du tapis. Ce profilé rigide s'étend préférentiellement selon une direction rectiligne, en présentant une section transversale en « T » inversé ou en « L » ou en « U » ou en « V ».

Le profilé est avantageusement une pièce rigide qui est réalisée dans un matériau métallique, plastique, composite, ou tout autre matériau rigide.

De préférence, mais non exclusivement, l'élément de fixation est fixé par vissage. Il s'agit par exemple d'un ensemble constitué d'un goujon et d'un écrou.

Selon un aspect avantageux de l'invention, le dispositif d'accroche comporte en outre un contre-support disposé sur la face inférieure tout en étant fixé au support par l'élément de fixation.

Grâce à ce contre-support, on améliore sensiblement la fixation du dispositif d'accroche au tapis de désenlisement.

On comprend que le tapis est alors enserré entre le support et le contre-support qui sont fixés entre eux par l'intermédiaire de l'élément de fixation, ce dernier traversant le tapis selon son épaisseur.

Selon un mode de réalisation préférentiel, le dispositif d'accroché comporte en outre une seconde plaque d'accroche faisant saillie depuis le contre-support et s'étendant selon la direction transversale, de façon à s'étendre dans une surface transversale à la face inférieure du tapis.

La seconde plaque d'accroche forme alors un patin anti glissement qui permet au tapis de ne pas glisser par rapport au sol lorsqu'un véhicule s'engage ou roule sur le tapis.

Préférentiellement, la seconde plaque d'accroche est sensiblement orthogonale à la face inférieure du tapis.

Aussi, les première et seconde plaques s'étendent orthogonalement au tapis de désenlisement de part et d'autre dudit tapis.

Selon une variante avantageuse, la seconde plaque et le contre-support forment une seule et même pièce et constituent un second profilé rigide qui s'étend selon la direction transversale du tapis. De préférence, la section transversale est en « T » inversé ou en « L » ou en « U » ou en « V ».

Avantageusement, pour améliorer le maintien du tapis au sol, l'élément de fixation présente une extrémité supérieure fixée au support et une extrémité inférieure fixée au contre-support tout en faisant saillie au-delà du contre-support afin de former un patin anti-glissement.

De préférence, l'élément de fixation traverse le contre-support en s'étendant le sol afin de former le patin anti-glissement.

Selon un autre aspect avantageux de l'invention, la portion principale de roulage comporte au moins deux séries de dispositifs d'accroché formant deux bandes d'accroche distinctes et parallèles qui s'étendent selon la direction longitudinale en définissant deux zones de passage pour les roues du véhicule.

Le fait de disposer les dispositifs d'accroche uniquement dans les zones de passage des roues a pour effet d'alléger la masse du tapis de désenlisement.

### Brève description des dessins

L'invention sera mieux comprise à la lecture de la description qui suit d'un mode de réalisation de l'invention donné à titre d'exemple non limitatif, en référence aux dessins annexés, sur lesquels :
- la figure **1** illustre un véhicule enlisé, un tapis de désenlisement selon l'invention ayant été placé devant le véhicule;
- la figure **2** est une vue en perspective du tapis de désenlisement selon l'invention ;
- la figure **3** est une vue de dessus du tapis de désenlisement de la figure **2** ;
- la figure **4** illustre le tapis de désenlisement de la figure **3** en position enroulée ;
- la figure **5** est une vue de côté du tapis de la figure **3**, montrant plus particulièrement les crampons de la languette d'amorce de roulage ;
- la figure **6** montre le tapis de désenlisement posé sur le sol, la languette d'amorce de roulage étant abaissée et s'étendant dans une ornière ;
- la figure **7** est une vue de détail de l'ornière dans laquelle la roue du véhicule est enlisée.
- La figure **8** illustre un tapis de désenlisement selon une variante de l'invention.
- La figure **9** est une vue éclatée de détail du dispositif d'accroche du tapis selon un premier mode de réalisation ;
- La figure **10** est une vue éclatée de détail du dispositif d'accroche pour le tapis selon un deuxième mode de réalisation ;
- La figure **11** illustre, en vue éclatée, une variante du deuxième mode de réalisation du dispositif d'accroche de la figure 10 **;**
- La figure **12** illustre la variante de la figure **11** en vue assemblée ;
- La figure **13** est une vue éclatée de détail du dispositif d'accroche pour le tapis selon un troisième mode de réalisation ; et
- La figure **14** illustre, en vue éclatée, une variante du troisième mode de réalisation du dispositif d'accroche de la figure **8****.**

### Description détaillée de l'invention

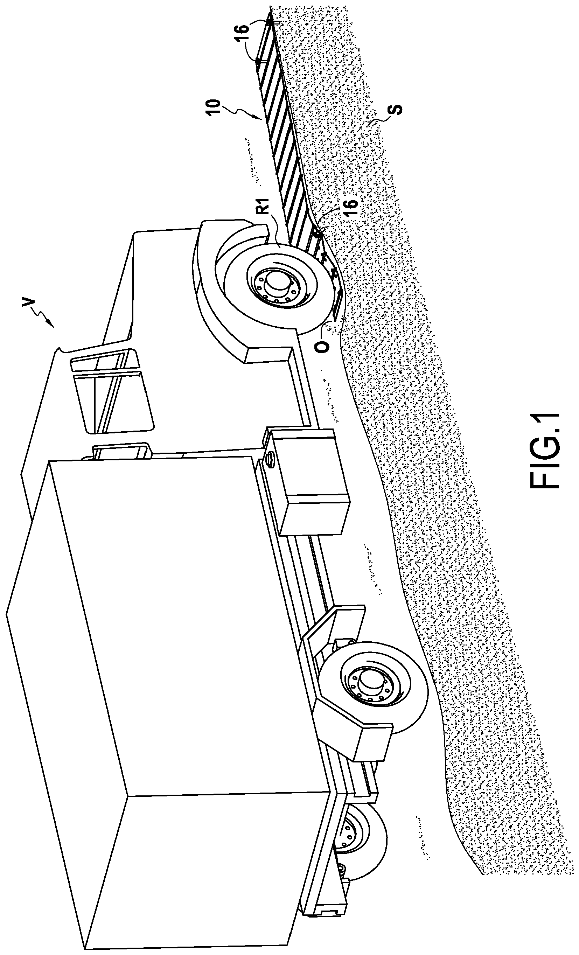

Sur la figure **1**, on a illustré un véhicule **V** qui est enlisé dans le sable **S.** Dans cet exemple, le véhicule **V** comporte une roue motrice avant **R1** qui est enlisée au fond d'une ornière **O.** Cette ornière **O** s'est formée dans le sable à cause du patinage de la roue motrice avant **R1**.

Pour désenliser, et plus précisément désensabler le véhicule **V**, on utilise un tapis de désenlisement **10** conforme à la présente invention. Plus précisément, le tapis de désenlisement **10** est utilisé dans cet exemple pour désenliser la roue motrice avant **R1** en la faisant sortir de l'ornière **O**.

Le tapis de désenlisement est disposé en avant de la roue motrice avant **R1**.

Comme il sera expliqué plus en détail ci-dessous, la roue motrice avant **R1** accroche le tapis d'enlisement et roule dessus, ce qui permet de dégager la roue **R1** de l'ornière.

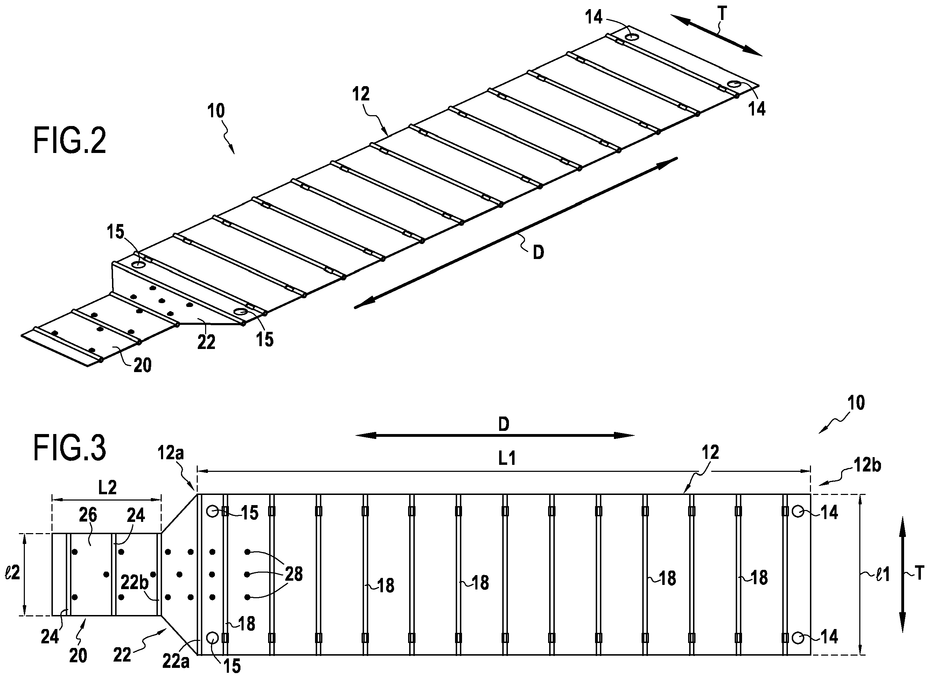

Le tapis de désenlisement **10** selon l'invention va maintenant être décrit plus en détail en référence aux figures **2** à **5**.

Le tapis de désenlisement **10** présente une direction longitudinale **D** et une direction transversale **T**. Il présente une face inférieure **116** et une face supérieure de roulage **114**. Le tapis de désenlisement **10** comporte une portion principale de roulage **12** qui présente une longueur **L1**, considérée selon la direction longitudinale **D**, et une largeur **l1**, considérée selon la direction transversale **T**.

Dans cet exemple non limitatif, la longueur **L1** de la portion principale de roulage est de l'ordre de 2 mètres, tandis que sa largeur **l1** est de l'ordre de 1 mètre.

La portion principale de roulage **12** comporte une pluralité d'éléments de rigidification **18** constitués, en l'espèce, de barres métalliques qui s'étendent selon la largeur de la portion principale de roulage tout en étant logées dans la portion principale de roulage. Ces éléments de rigidification ont pour effet de rigidifier la portion principale de roulage dans sa direction transversale afin d'éviter que cette dernière ne s'affaisse lors du passage du véhicule.

Tel que représenté sur la figure **3**, le tapis de désenlisement **10** comporte en outre une languette d'amorce de roulage **20** qui est fixée à une première extrémité longitudinale **12a** de la portion principale de roulage.

Dans cet exemple, la languette d'amorce de roulage **20** présente une forme sensiblement rectangulaire. On précise que, sans sortir du cadre de la présente invention, la languette d'amorce de roulage **12** pourrait présenter une forme différente, par exemple une extrémité libre légèrement bombée.

La languette d'amorce de roulage **20** présente une longueur **L2** considérée selon la direction longitudinale **D** et une largeur **l2** considérée selon la direction transversale **T.**

Selon un aspect particulièrement avantageux de l'invention, la largeur **l2** de la languette d'amorce de roulage **20** est sensiblement inférieure à la largeur **l1** de la portion principale de roulage **12**, de manière à pouvoir être facilement positionnée dans l'ornière **O.**

Dans cet exemple, la largeur **l2** de la languette d'amorce de roulage **20** présente une largeur d'environ 25 centimètres.

En pratique, la largeur **l2** de la languette d'amorce de roulage est choisie de manière à être sensiblement égale à la largeur de la roue du véhicule. On pourra donc choisir une largeur comprise entre 15 et 40 centimètres.

On constate également que la longueur **L1** de la portion principale de roulage **12** est sensiblement supérieure à la longueur **L2** de la languette d'amorce de roulage.

Un intérêt est de permettre à la roue qui était enlisée de rouler sur une distance suffisamment longue pour s'assurer que les roues arrière franchissent l'ornière à leur tour.

Par ailleurs, la languette d'amorce de roulage **20** comporte également des éléments de rigidification **24** qui s'étendent transversalement selon sa largeur, de façon à rigidifier la languette dans sa direction transversale afin d'éviter qu'elle ne plisse ou glisse sous la roue. Il s'agit là-encore de barres rigides, par exemple métalliques, qui, dans cet exemple, sont logées dans la languette d'amorce de roulage.

Selon l'invention, la languette d'amorce de roulage **20** est fixée à la première extrémité **12a** de la portion principale de roulage **12** par une portion de connexion formant charnière **22**. Cette portion de connexion **22** est agencée pour abaisser la languette d'amorce de roulage **20** par rapport au plan de la portion principale de roulage **12**.

Dans cet exemple, la portion de connexion formant charnière présente une forme trapézoïdale, sa grande base étant constituée par un premier bord d'extrémité **22a** relié à la portion principale de roulage **12**, tandis que sa petite base est constituée par un second bord d'extrémité **22b** relié à la languette d'amorce de roulage **20**.

Dans cet exemple, la portion de connexion formant charnière **22** est articulée par rapport à la portion principale de roulage et par rapport à la languette d'amorce de roulage, respectivement autour d'axes de pivotement **X1** et **X2**, grâce à quoi, la languette d'amorce de roulage peut être abaissée par rapport à la portion principale de roulage.

Dans cet exemple, la portion de connexion formant charnière **20** est souple, de même que la portion principale de roulage **12** et la languette d'amorce de roulage **20**.

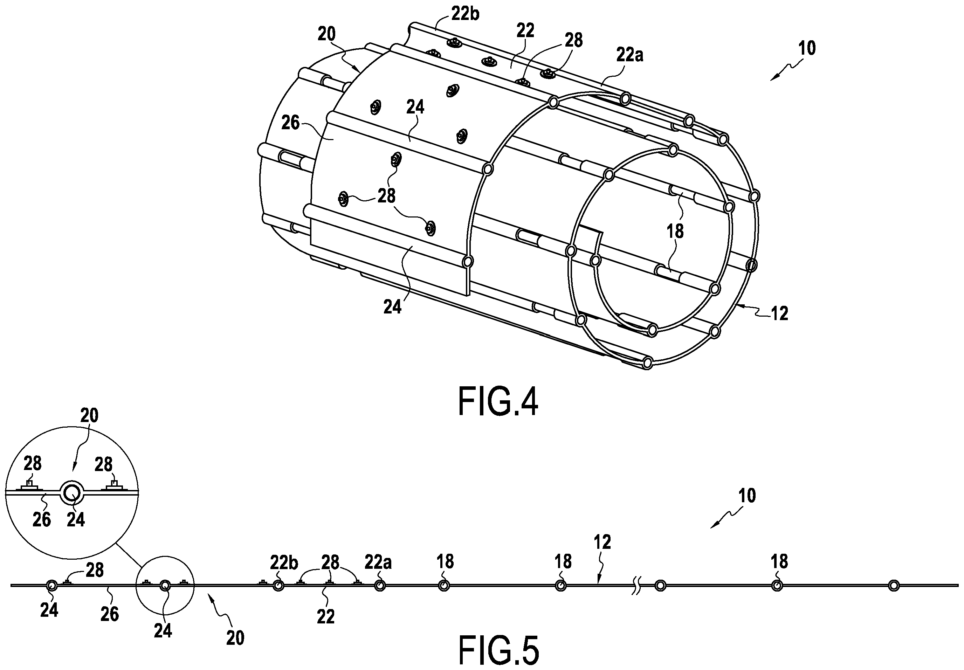

Cette souplesse permet au tapis de désenlisement **10** d'être enroulé sur lui-même, comme cela a été représenté sur la figure **4**, de façon à pouvoir être déployé rapidement.

Les éléments de rigidification **18** de la portion principale de roulage, et les éléments de rigidification **24** de la languette d'amorce de roulage qui s'étendent selon la direction transversale du tapis de désenlisement **10**, confèrent au tapis une rigidité transversale sans s'opposer à son enroulage sur lui-même.

Pour garantir l'adhérence de la roue **R1** sur le tapis **10**, et notamment lors du début de la phase de sortie de l'ornière, la languette d'amorce de roulage comporte une pluralité de crampons **28** qui sont disposés sur la face supérieure **26** de la languette.

Dans cet exemple, les crampons **28** sont des pièces métalliques rapportées qui font saillie depuis la face supérieure **26** de la languette d'amorce de roulage et qui viennent coopérer avec le pneu.

Dans cet exemple, la portion de connexion formant charnière **22** est également munie de crampons **28**.

Comme on le constate sur la figure **3**, la portion principale de roulage **12** présente une forme sensiblement rectangulaire dont les coins de la seconde extrémité **12b**, opposée à la languette d'amorce de roulage, comportent des moyens de fixation au sol du tapis.

Dans cet exemple, les moyens de fixation comprennent des premiers orifices de fixation **14** ménagés dans le tapis et destinés à recevoir des attaches ou, plus préférentiellement, des organes de fixation **16** permettant de fixer le tapis de désenlisement **10** au sol **S**. Un exemple d'organes de fixation est décrit dans le document WO 2014/170574.

Ces moyens de fixation permettent de fixer efficacement le tapis au sol et d'empêcher ainsi qu'il ne s'enroule sous la roue et dans l'ornière lors de l'engagement de la roue sur le tapis de désenlisement.

Dans l'exemple de la figure **3**, la première extrémité comporte également d'autres moyens de fixation, qui comprennent des seconds orifices de fixation **15** destinés à recevoir des organes de fixation **17** du même type que ceux décrits ci-dessus. Sans sortir du cadre de la présente invention, ces autres moyens de fixation disposés à la première extrémité **12a** de la portion principale de roulage peuvent être omis.

La portion principale de roulage **12** et la languette d'amorce de roulage **20** sont ici constituées d'un textile recouvert d'une couche élastomère. Il en est de même de la portion de connexion formant charnière **22**.

Un tel matériau offre une souplesse et une excellente tenue mécanique. Il permet également de faciliter le nettoyage du tapis.

Les éléments de rigidification **18** et **24** s'étendent de préférence dans l'épaisseur du tapis de désenlisement. Plus précisément, le tapis est constitué dans cet exemple de deux couches textiles superposées l'une à l'autre. Dans cet exemple, les éléments de rigidification sont disposés entre les deux couches textiles.

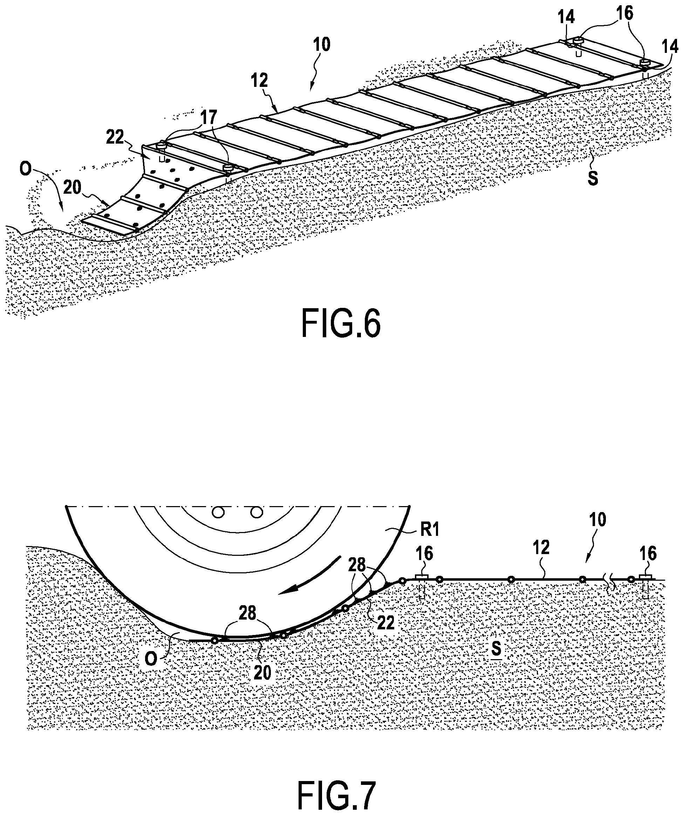

En se référant maintenant à la figure **6**, on va expliquer plus en détail le mode de fonctionnement du tapis de désenlisement selon l'invention.

Le tapis est placé au sol de sorte que sa portion principale de roulage est disposée devant le véhicule en avant de l'ornière **O**, tandis que la languette d'amorce de roulage est positionnée au fond de l'ornière **O** en étant engagée sous la roue motrice avant **R1** (non représentée sur la figure **7**). La portion de connexion formant charnière **22** permet d'abaisser la languette d'amorce de roulage par rapport à la portion principale de roulage. Cela permet d'incliner et de positionner tout ou partie de la languette d'amorce de roulage en dessous de la roue motrice avant **R1**, tel que cela a été représenté sur la figure **7**.

Comme la portion principale de roulage présente une largeur sensiblement supérieure à celle de la languette d'amorce de roulage, et également grâce à la présence des éléments de rigidification transversaux, la portion principale de roulage reste sensiblement plane et ne risque pas de s'affaisser en formant à son tour une ornière.

Le tapis est ensuite fixé au sol grâce aux moyens de fixation, notamment grâce aux premiers orifices **14** qui reçoivent les organes de fixation **16**.

Lorsque la roue motrice avant **R1** enlisée commence à tourner, le pneu vient au contact des crampons. La rotation de la roue a pour effet de tirer la languette d'amorce de roulage sous la roue grâce à quoi la surface de contact entre la roue et la languette d'amorce de roulage augmente.

Il s'ensuit que davantage de crampons viennent s'engager avec le pneu, en conséquence de quoi l'adhérence de la roue **R1** sur la languette d'amorce de roulage augmente. Comme le tapis est fixé au sol grâce aux moyens de fixation, la roue cesse de patiner et roule successivement sur la languette d'amorce de roulage, la portion de connexion et la portion principale de roulage, à la suite de quoi la roue avant **R1** sort de l'ornière **O** et peut rouler jusqu'à l'extrémité longitudinale de la portion principale de roulage opposée à la languette **20** sans risquer de s'enliser.

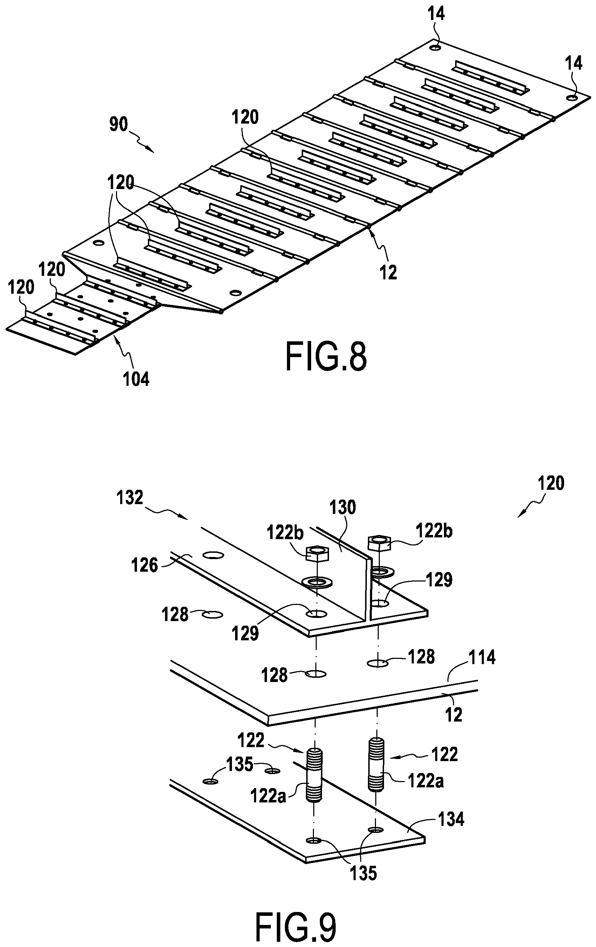

En se référant maintenant à la figure **8**, on va décrire une variante du tapis de désenlisement selon l'invention.

Sur cette figure **8**, on a représenté une variante du tapis de désenlisement selon l'invention qui comporte un corps souple muni d'une pluralité de dispositifs d'accroche **120**, qui seront décrits en détail ci-après. Ces dispositifs d'accroche sont distinctes des éléments de rigidification **18.** Le tapis de désenlisement **90** présente une portion principale de roulage **12** qui se termine par une languette d'amorce de roulage **20** dont la largeur est strictement inférieure à la largeur de la portion principale de roulage **12.** Dans ce mode de réalisation, les dispositifs d'accroche **120** présentent une longueur qui est sensiblement égale à la moitié de la largeur de la portion médiane **12** ; les dispositifs d'accroche **120** étant disposés au milieu de la portion principale de roulage **12** ainsi que sur la languette d'amorce de roulage **20.**

Dans une autre configuration, sans limiter l'invention à ce mode de réalisation, les éléments d'accroche peuvent s'étendre uniquement sur la portion principale de roulage **12**

Nous allons maintenant décrire plus en détails les dispositifs d'accroché. La figure **9** illustre en détail un des dispositifs d'accroche **120,** on constate que ce dernier comporte un support **126** qui est destiné à être disposé sur la face supérieure de roulage **114** et qui s'étend selon la direction transversale tout en étant fixé à la portion principale de roulage **12** par des éléments de fixation **122.**

Dans cet exemple non limitatif, les éléments de fixation **122** sont constitués de goujons **122a** et d'écrous **122b.**

Pour réaliser la fixation du support **126** au tapis **90,** ce dernier est pourvu d'orifices **128** qui traversent ledit tapis selon son épaisseur. Le support est également pourvu de trous **129,** disposés en regard des orifices **128** et au travers desquels s'étendent les goujons des éléments de fixation **122.**

Le dispositif d'accroche **120** comporte en outre une première plaque d'accroche **130** qui fait saillie depuis le support **126.** Plus précisément, la première plaque d'accroche **130** s'étend selon la direction transversale T du tapis **90** et s'étend dans une surface qui est transversale à la face supérieure de roulage. En l'espèce, la première plaque d'accroche **130** est sensiblement perpendiculaire au support **126** et à la face supérieure de roulage **114.** En outre, dans cet exemple, le support **126** et la première plaque d'accroche **130** forment une seule et même pièce constituant un premier profilé rigide **132** ayant une section transversale en « T » inversé. Ce premier profilé rigide s'étend donc selon la direction transversale T du tapis.

On constate par ailleurs que les éléments de fixation **122** sont disposés de part et d'autre de la première plaque d'accroche **130,** ce qui a pour effet d'assurer un maintien très stable du dispositif d'accroche au tapis de désenlisement.

Pour améliorer encore la fixation du dispositif d'accroche au tapis, le dispositif d'accroche **120** comporte en outre un contre-support **134** qui est disposé sur la face inférieure **116** du tapis tout en étant fixé au support **126** par le ou les éléments de fixation **122.** On comprend donc que le tapis est enserré entre le support et le contre-support, qui présentent sensiblement les mêmes dimensions longitudinales et transversales.

Dans l'exemple de la figure **9**, le contre-support **134** se présente sous la forme d'une lame plane qui s'étend selon la direction transversale du tapis **90.** Le contre-support **134** est également pourvu d'orifices **135** qui sont fixés par vissage aux goujons **122a.** Bien entendu, d'autres modes de fixation du contre-support **134** aux éléments de fixation **122** pourraient être envisagés. Selon une variante, les goujons **122a** pourraient former une seule pièce avec la lame du contre-support **134.**

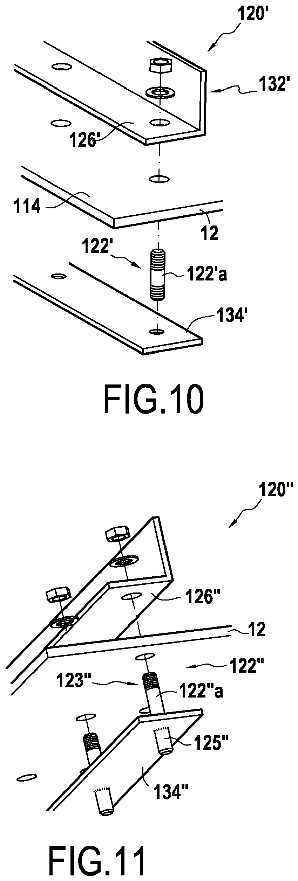

Sur la figure **10****,** on a représenté un deuxième mode de réalisation du dispositif d'accroche **120.**

Le dispositif d'accroche **120'** de la figure **10** se distingue de celui de la figure **9** par le fait qu'il comprend un premier profilé rigide **132'** qui présente une section transversale en « L », et non pas en « T » inversé comme celui de la figure **9**. L'avantage du profilé en « L » est de diminuer la masse des dispositifs d'accroché, et donc d'alléger le tapis de désenlisement.

Dans l'exemple de la figure **10****,** il est également prévu un contre-support **134'** de telle manière que le tapis **90** est enserré entre le contre-support **134'** et le support **126'**.

Selon un autre aspect avantageux de l'invention illustré en figures **9** et **9**, les éléments de fixation **122'** et **122",** présentent une extrémité supérieure fixée au support et une extrémité inférieure fixée au contre-support tout en formant une protubérance ou ergot s'étendant au-delà du contre-support, laquelle protubérance a pour fonction de former un patin anti-glissement, qui permet d'améliorer le maintien du tapis de désenlisement sur le sol.

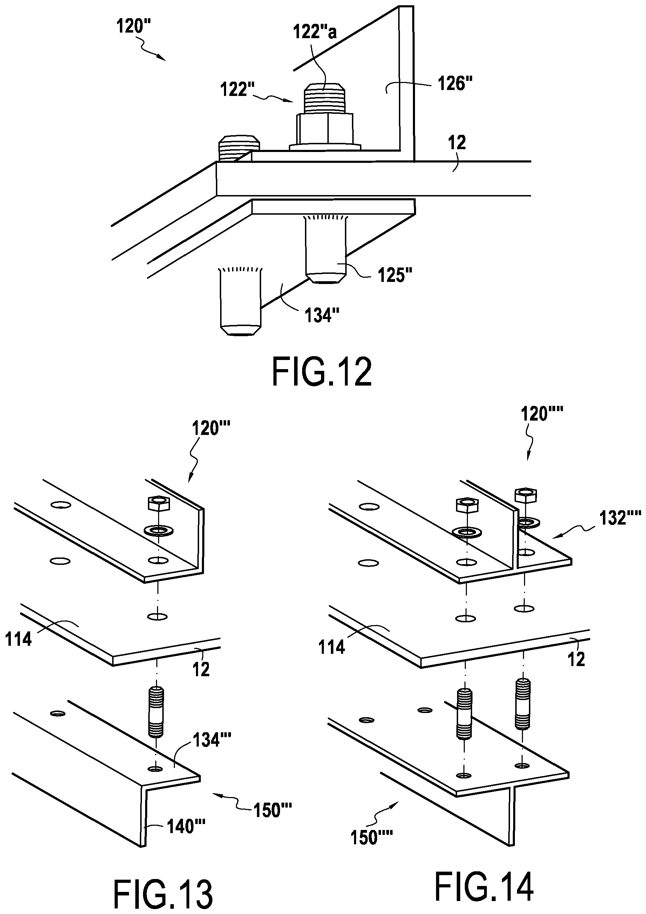

Le dispositif d'accroche **120"** illustré sur les figures **11** et **12** est une variante du deuxième mode de réalisation illustré en figure **10**. Dans cette variante, l'élément de fixation **122"** forme une seule pièce avec le contre-support.

L'élément de fixation **122"** présente une extrémité supérieure **123"** qui est fixée au support **126"** et une extrémité inférieure **124"** qui est fixée au contre-support **134"** tout en formant là-encore une protubérance **125"** s'étendant au-delà du contre-support **134'**. Comme on le constate sur la figure **12**, cette protubérance **125"** a pour fonction de former un patin anti glissement, qui permet d'améliorer le maintien du tapis de désenlisement sur le sol.

En se référant à la figure **13**, on va décrire un troisième mode de réalisation du dispositif d'accroche du tapis selon l'invention.

Le dispositif d'accroche **120*"'*** illustré en figure **13** se distingue du dispositif d'accroche **120'** illustré en figure **10** par le fait qu'il comporte en outre une seconde plaque d'accroche **140*"'*** qui fait saillie depuis le contre-support **134*"'*** et qui s'étend selon la direction transversale du tapis **90**. En outre, la seconde plaque d'accroche **140*'"*** s'étend dans une surface transversale à la face inférieure **116** du tapis **90.**

Comme on le constate sur la figure **13****,** le contre-support **134*"'*** et la seconde plaque d'accroche **140*"'*** forment une seule et même pièce constituant un second profilé rigide **150*"'*** qui s'étend selon la direction transversale du tapis. Dans l'exemple de la figure **13****,** la section transversale du second profilé rigide **150*"'*** présente la forme d'un « L », similaire à celui du premier profilé rigide du dispositif d'accroche de la figure **10****.** Le dispositif d'accroche **120*""*** de la figure **14** est une variante du troisième mode de réalisation de la figure **13** qui s'en distingue par le fait que les sections transversales des premier et second profilés rigides présentent la forme d'un «T», comme pour le premier profilé rigide illustré en figure **9****.** Cette configuration en « T » présente l'intérêt d'assurer un excellent maintien du tapis de désenlisement **90** au sol tout en conférant une meilleure fixation du dispositif d'accroche au tapis dans la mesure où les premier et second profilés rigides en « T » sont fixés par l'intermédiaire de deux séries d'éléments de fixation disposés de part et d'autre des première et seconde plaques d'accroché.

L'invention n'est pas limitée aux modes de réalisation présentés, mais s'étend à toutes les variantes dans le cadre de la portée des revendications.

## Revendications

1. Tapis de désenlisement (10) enroulable sur lui-même pour véhicule (V) ayant au moins une roue (R1), ledit tapis de désenlisement ayant une face inférieure et une face supérieure de roulage (114), et comportant une portion principale de roulage (12), ainsi qu'une languette d'amorce de roulage (20) qui est fixée à une première extrémité (12a) de la portion principale de roulage (12) par une portion de connexion formant charnière (22) agencée pour abaisser la languette d'amorce de roulage par rapport à la portion principale de roulage, grâce à quoi la languette d'amorce de roulage peut être positionnée au fond d'une ornière (O) dans laquelle ladite roue du véhicule est enlisée, la languette d'amorce de roulage comportant une pluralité d'éléments de rigidification s'étendant transversalement, **caractérisé en ce que** la languette d'amorce de roulage comporte une face supérieure munie de crampons, la portion principale de roulage (12) et la languette d'amorce de roulage (20) étant constituées d'au moins une couche textile recouverte d'une couche de polymère.

2. Tapis de désenlisement selon la revendication **1**, dans lequel la languette d'amorce de roulage (20) présente une largeur (l2) sensiblement inférieure à la largeur (l1) de la portion principale de roulage (12).

3. Tapis de désenlisement selon la revendication **1** ou **2**, dans lequel la portion de connexion formant charnière (22) est souple.

4. Tapis de désenlisement selon l'une quelconque des revendications précédentes, dans lequel la portion de connexion formant charnière présente un premier bord d'extrémité (22a) relié à la portion principale de roulage (12) et un second bord d'extrémité (22b) relié à la languette d'amorce de roulage (20), la largeur du premier bord d'extrémité étant supérieure à la largeur du second bord d'extrémité.

5. Tapis de désenlisement selon l'une quelconque des revendications précédentes, dans lequel la portion principale de roulage (12) présente une longueur sensiblement supérieure à la longueur de la languette d'amorce de roulage.

6. Tapis de désenlisement selon la revendication **1**, dans lequel la portion principale de roulage et/ou la portion de connexion formant charnière comporte également une face supérieure munie de crampons (28) disposés dans la continuité des crampons de la languette d'amorce de roulage.

7. Tapis de désenlisement selon l'une quelconque des revendications précédentes, dans lequel la languette d'amorce de roulage (20) est détachable de la portion principale de roulage.

8. Tapis de désenlisement selon l'une quelconque des revendications précédentes, dans lequel la portion principale de roulage (12) présente une deuxième extrémité (12b), opposée à la première extrémité (12a), qui comporte des moyens de fixation au sol du tapis.

9. Tapis de désenlisement selon la revendication **8,** dans lequel les moyens de fixation au sol du tapis comportent au moins un orifice (14) destiné à coopérer avec un organe de fixation (16).

10. Tapis de désenlisement selon l'une quelconque des revendications précédentes, dans lequel la portion principale de roulage (12) comporte, en outre, au moins un dispositif d'accroche (120) pour augmenter la motricité du véhicule, ledit dispositif d'accroche s'étendant selon la direction transversale (T) en faisant saillie depuis la face supérieure de roulage (114) tout en étant fixé au tapis (10) par au moins un élément de fixation (122) afin de former un patin antidérapant.

11. Tapis de désenlisement selon la revendication **10,** dans lequel le dispositif d'accroche (120) comporte :
un support (126) disposé sur la face supérieure de roulage et
s'étendant selon la direction transversale tout en étant fixé audit tapis de désenlisement (10) par l'élément de fixation (122) ;
une première plaque d'accroche (130) faisant saillie depuis le support (126) et s'étendant selon la direction transversale (T) du tapis de désenlisement (10), de façon à s'étendre dans une surface transversale à la face supérieure de roulage.

12. Tapis de désenlisement selon la revendication **11**, dans lequel le dispositif d'accroche (120) comporte en outre un contre-support (134) disposé sur la face inférieure (116) tout en étant fixé au support (126) par l'élément de fixation (122).

13. Tapis de désenlisement selon la revendication **12**, dans lequel le dispositif d'accroche comporte en outre une seconde plaque d'accroche (140*'"*) faisant saillie depuis le contre-support (134*"'*) et s'étendant selon la direction transversale, de façon à s'étendre dans une surface transversale à la face inférieure (116) du tapis (10).

14. Tapis de désenlisement selon l'une quelconque des revendications **10** à **13**, dans lequel l'élément de fixation (122") présente une extrémité supérieure (123*"*) fixée au support (126") et une extrémité inférieure (125*"*) fixée au contre-support (134*"*) formant une protubérance s'étendant au-delà du contre-support afin de former un patin anti-glissement.

## Patentansprüche

1. Einrollbare Gripmatte (10) für ein Fahrzeug (V) mit mindestens einem Rad (R1), wobei die Gripmatte eine untere und eine obere Rollfläche (114) aufweist und einen Hauptrollabschnitt (12) sowie eine Anfangsrollzunge (20) umfasst, die an einem ersten Ende (12a) des Hauptrollabschnitts (12) durch einen gelenkigen Verbindungsabschnitt (22) befestigt ist, der dazu ausgelegt ist, die Anfangsrollzunge relativ zu dem Hauptrollabschnitt abzusenken, wodurch die die Anfangsrollzunge am Boden einer Spurrille (O), in der das Fahrzeugrad festsitzt, positioniert werden kann, wobei die Anfangsrollzunge eine Vielzahl von quer verlaufenden Versteifungselementen aufweist, **dadurch gekennzeichnet, dass** die Anfangsrollzunge eine mit Noppen versehene Oberseite umfasst, wobei der Hauptrollabschnitt (12) und die Anfangsrollzunge (20) aus mindestens einer Textilschicht bestehen, die mit einer Polymerschicht bedeckt ist.

2. Gripmatte gemäß Anspruch 1, wobei die Anfangsrollzunge (20) eine Breite (l2) aufweist, die wesentlich kleiner ist als die Breite (11) des Hauptrollabschnitts (12).

3. Gripmatte gemäß Anspruch 1 oder 2, wobei der gelenkige Verbindungsabschnitt (22) flexibel ist.

4. Gripmatte gemäß einem der vorangehenden Ansprüche, wobei der gelenkige Verbindungsabschnitt eine erste Endkante (22a), die mit dem Hauptrollabschnitt (12) verbunden ist, und eine zweite Endkante (22b), die mit der Anfangsrollzunge (20) verbunden ist, aufweist, wobei die Breite der ersten Endkante größer ist als die Breite der zweiten Endkante.

5. Gripmatte gemäß einem der vorangehenden Ansprüche, wobei der Hauptrollabschnitt (12) eine Länge aufweist, die deutlich größer als die Länge der Anfangsrollzunge ist.

6. Gripmatte gemäß Anspruch 1, wobei der Hauptrollabschnitt und/oder der gelenkige Verbindungsabschnitt ebenfalls eine mit Noppen (28) versehene Oberseite umfasst, die in Fortsetzung der Noppen der Anfangsrollzunge angeordnet sind.

7. Gripmatte gemäß einem der vorangehenden Ansprüche, wobei die Anfangsrollzunge (20) vom Hauptrollabschnitt lösbar ist.

8. Gripmatte gemäß einem der vorangehenden Ansprüche, wobei der Hauptrollabschnitt (12) ein zweites Ende (12b) aufweist, das dem ersten Ende (12a) gegenüberliegt und Mittel zum Befestigen der Matte am Boden umfasst.

9. Gripmatte gemäß Anspruch 8, wobei die Mittel zum Befestigen der Matte am Boden mindestens eine Öffnung (14) umfassen, die geeignet sind, mit einem Befestigungselement (16) zusammenzuwirken.

10. Gripmatte gemäß einem der vorangehenden Ansprüche, wobei der Hauptrollabschnitt (12) ferner mindestens eine Greifvorrichtung (120) zur Erhöhung der Traktion des Fahrzeugs umfasst, wobei sich die Greifvorrichtung in Querrichtung (T) erstreckt, indem sie von der oberen Rollfläche (114) vorsteht, während sie an der Matte (10) durch mindestens ein Befestigungselement (122) befestigt ist, um eine rutschfeste Standfläche zu bilden.

11. Gripmatte gemäß Anspruch 10, wobei die Greifvorrichtung (120) umfasst:
einen Träger (126), der an der oberen Rollfläche angeordnet ist und sich in Querrichtung erstreckt, während er durch das Befestigungselement (122) an der Gripmatte (10) befestigt ist, und
eine erste Greifplatte (130), die von dem Träger (126) vorsteht und sich in Querrichtung (T) der Gripmatte(10) erstreckt, sodass sie sich über eine Querfläche zur Oberseite der Rollfläche erstreckt.

12. Gripmatte gemäß Anspruch 11, wobei die Greifvorrichtung (120) ferner einen Gegenhalter (134) aufweist, der an der Unterseite (116) angeordnet ist, während er an dem Träger (126) durch das Befestigungselement (122) befestigt ist.

13. Gripmatte gemäß Anspruch 12, wobei die Greifvorrichtung ferner eine zweite Greifplatte (140"') aufweist, die von dem Gegenhalter (134"') vorsteht und sich in Querrichtung erstreckt, sodass sie sich über eine Querfläche zur Unterseite (116) der Matte (10) erstreckt.

14. Gripmatte gemäß einem der Ansprüche 10 bis 13, wobei das Befestigungselement (122") ein oberes Ende (123"), das an dem Träger (126") befestigt ist, und ein unteres Ende (125"), das an dem Gegenhalter (134") befestigt ist, aufweist, sodass ein Vorsprung gebildet wird, der sich über den Gegenhalter hinaus erstreckt, um eine rutschfeste Standfläche zu bilden.

## Claims

1. A roll-up traction mat (10) for a vehicle (V) having at least one wheel (R1), said traction mat having a bottom face and a top face constituting a running track (114), and comprising a main track portion (12), as well as a track starter tab (20) that is fastened to a first end (12a) of the main track portion (12) by a hinge-forming connection portion (22) arranged to lower the track starter tab relative to the main track portion, by means of which the track starter tab can be positioned at the bottom of a rut (O) in which said wheel of the vehicle is stuck, the track starter tab comprising a plurality of stiffener elements extending transversely, **characterized in that** the track starter tab comprises a top face provided with studs, the main track portion (12) and the track starter tab (20) being constituted by at least one textile layer covered in a polymer layer.

2. A traction mat according to claim 1, wherein the track starter tab (20) presents a width (ℓ2) that is substantially less than the width (ℓ1) of the main track portion (12).

3. A traction mat according to claim 1 or 2, wherein the hinge-forming connection portion (22) is flexible.

4. A traction mat according to any preceding claim, wherein the hinge-forming connection portion presents a first end edge (22a) connected to the main track portion (12) and a second end edge (22b) connected to the track starter tab (20), the width of the first end edge being greater than the width of the second end edge.

5. A traction mat according to any preceding claim, wherein the main track portion (12) presents a length that is substantially greater than the length of the track starter tab.

6. A traction mat according to claim 1, wherein the main track portion and/or the hinge-forming connection portion also comprises a top face provided with studs (28) in continuity with the studs of the track starter tab.

7. A traction mat according to any preceding claim, wherein the track starter tab (20) is detachable from the main track portion.

8. A traction mat according to any preceding claim, wherein the main track portion (12) presents a second end (12b), remote from the first end (12a), which second end includes means for fastening the mat to the ground.

9. A traction mat according to claim 8, wherein the means for fastening the mat to the ground comprise at least one orifice (14) designed to cooperate with a fastener member (16) .

10. A traction mat according to any preceding claim, wherein the main track portion (12) further comprises at least one grip device (120) for increasing drivability of the vehicle, said grip device extending in the transverse (T) direction by projecting from the top track face (114) while being fastened to the mat (10) by at least one fastener element (122) so as to form a non-slip track shoe.

11. A traction mat according to claim 10, wherein the grip device (120) comprises:
. a support (126) disposed on the top track face and extending in the transverse direction while being fastened to said traction mat (10) by the fastener element (122);
. a first grip plate (130) projecting from the support (126) and extending in the transverse direction (T) of the traction mat (10), in such a manner as to extend in a surface transverse to the top track face.

12. A traction mat according to claim 11, wherein the grip device (120) further comprises a counter-support (134) disposed on the bottom face (116) while being fastened to the support (126) by the fastener element (122) .

13. A traction mat according to claim 12, wherein the grip device further comprises a second grip plate (140"') projecting from the counter-support (134"') and extending in the transverse direction, in such a manner as to extend in a surface that is transverse to the bottom face (116) of the mat (10).

14. A traction mat according to any one of claims 10 to 13, wherein the fastener element (122") presents a top end (123") fastened to the support (126") and a bottom end (125") fastened to the counter-support (134") forming a protrusion extending beyond the counter-support so as to form a non-slip track shoe.
